Europäisches Patentamt

European Patent Office

Office européen des brevets

(11) Veröffentlichungsnummer: **0 408 823 A2**

# EUROPÄISCHE PATENTANMELDUNG

(21) Anmeldenummer: 90101767.3

(22) Anmeldetag: 30.01.90

(51) Int. Cl.5: **G01K 1/08**, G01K 7/18

(30) Priorität: 15.07.89 DE 3923535

(43) Veröffentlichungstag der Anmeldung:
23.01.91 Patentblatt 91/04

(84) Benannte Vertragsstaaten:
**BE DE FR NL**

(71) Anmelder: **HERAEUS SENSOR GMBH**
**Heraeusstrasse 12-14, Postfach 15 53**
**D-6450 Hanau(DE)**

(72) Erfinder: **Wienand, Heinz Karl, Dr.**
**Mudweg 4**
**D-8750 Aschaffenburg(DE)**

(74) Vertreter: **Heinen, Gerhard, Dr.**
**Heraeus Holding GmbH Zentralbereich**
**Patente und Lizenzen Heraeusstrasse 12-14**
**D-6450 Hanau am Main(DE)**

(54) Temperaturmessfühler.

(57) Ein zur Messung an mechanisch schwingenden Systemen vorgesehener Temperaturfühler mit einer Schutzhülse enthält einen Temperatursensor, der über einen federnd ausgebildeten Träger in Form einer Leiterplatte mit einer Signalübertragungsleitung verbunden ist; der Träger liegt unter Federspannung an der Innenseite des Schutzrohres an; die gegeneinander isolierten Leiterbahnen sind an ihren Enden jeweils mit Kontaktflächen zum Anschluß des Temperatursensors bzw. der Signalübertragungsleitung versehen.

EP 0 408 823 A2

## TEMPERATURMESSFÜHLER

Die Erfindung betrifft einen Temperaturmeßfühler, bei dem ein Temperatursensor in einer Schutzhülse angeordnet und über im schutzrohr verlaufende Zuleitungen mit Anschlußkontakten zum Anschluß an Signalübertragungsleitungen versehen ist.

Aus der DE-AS 19 30 952 ist ein temperaturempfindliches, als Motorschutzfühler verwendbares Element bekannt, bei dem ein Thermistor sich im Fenster einer flexiblen Isolierplatte befindet, welche beidseitig von dünnen Isolierplatten abgedeckt ist, die jeweils eine Leiterbahn zur Kontaktierung des Themistors aufweisen. Das temperaturempfindliche Element befindet sich zusammen mit den Isolierplatten in einer blattförmigen Umhüllung, wobei die Enden der Leiterbahnen mit den Anschlußenden einer Signalübertragungsleitung durch Lotkontakte verbunden sind.

Die bekannte Vorrichtung ist aufgrund ihrer blattförmigen Ausbildung praktisch nur in Wicklungsordnungen elektrischer Maschinen anwendbar, während ihr Einsatz in Schutzrohren nicht möglich ist.

Weiterhin ist aus der DD-PS 81 231 ein Widerstandsthermometer für die Temperaturmessung unter erhöhter Schwingungsbeanspruchung, vorzugsweise für die Abgastemperaturmessung an Schiffsdieselmaschinen bekannt, das ein Schutzrohr aufweist, welches ein Isolierrohr aus einem geeigneten keramischen Werkstoff zur Aufnahme eines oder mehrerer Meßwiderstände einschließlich der inneren Zuleitungen enthält, wobei diese Zuleitungen wiederum von Isolier- rohren aus einem geeigneten keramischen Werkstoff umgeben sind. Die inneren Zuleitungen müssen entweder aus einem Stück durchgehend von der oder den Meßwiderstandswicklungen bis zu den Klemmen im Anschlußkopf gefertigt sein, oder es muß bei Vorhandensein eine Verbindungsstelle im Innenleiter diese außerhalb der kritischen Schwingungszone liegen. Die Isolierrohrkombination ist am Übergang zum Anschlußkopf mit einer wärmebeständigen, aushärtenden, jedoch nicht versprödeten Paste abgeschlossen.

Als problematisch erweist es sich hier, daß die Verbindung zwischen Thermosensor und Zuleitungen über eigene Verbindungspunkte hergestellt wird, die ein erhebliches Problem bei der Schwingungsfestigkeit darstellen.

Weiterhin beschreibt die US-PS 2 916 537 einen Temperatursensor, der zwecks hoher Empfindlichkeit und geringer Trägheit in Form von Leiterbahnen auf einem plattenförmigen Kunststoffträger aufgebracht ist, welcher beispielsweise aus Epoxydharz besteht. Die Enden der das Thermoelement bildenden Leiterbahnen sind jeweils mit einem Anschlußkontakt für Zuleitungsdrähte versehen. Die Temperaturmessung erfolgt in einem strömenden Medium, welches durch Öffnungen, in der das Substrat bildenden Platte zugeführt wird.

Eine solche Anordnung ist zwar für eine großflächige Strömungsmessung geeignet, doch ist ihre Anwendung aufgrund ihres großflächigen Aufbaus in einer Schutzhülse praktisch nicht möglich.

Ausgehend von dem Stand der Technik stellt sich die Erfindung die Aufgabe, einen Temperaturmeßfühler, bei dem ein Temperatursensor in einem Schutzrohr angeordnet ist und über im Schutzrohr verlaufende Zuleitungen mit Anschlußkontakten zur Signalübertragunsleitung versehen ist, als praktisch schwingungsfreies Meßelement aufzubauen. Dabei sollen insbesondere Resonanzerscheinungen, die auf Maschinenkörperschallfrequenzen zurückgehen und bisher zur Zerstörung von Zuleitungen bzw. fehlerhaften Meßergebnissen führen, unter Einsatz preisgünstiger Bauelemente verhindert werden. Der Anwendungsbereich erstreckt sich insbesondere auf Maschinenkörperschallfrequenzen von Kompressoren, Dieselantrieben sowie Abgastemperaturmessungen bei Verbrennungskraftmaschinen. Als Temperatursensor sollen je nach Anwendungszweck Temperaturmeßwiderstände oder piezoelektrische Temperatursensoren einsetzbar sein.

Die Aufgabe wird erfindungsgemäß dadurch gelöst, daß die Zuleitungen elektrisch voneinander isoliert in Form von Leiterbahnen auf einem federnd ausgebildeten Träger angeordnet sind, der unter Federspannung an der Innenfläche der Schutzhülse anliegt.

Als vorteilhaft erweist sich der preisgünstige Aufbau des Trägers in Form einer flexiblen gedruckten Schaltung, wobei Resonanzschwingungen in einem Bereich von 0 bis 5 Kilohertz mit Sicherheit vermieden werden.

In einer bevorzugten Ausführungsform weist der Temperaturmeßfühler Zuleitungen auf, die sich auf einem flexiblen plattenförmigen Träger aus Kunststoff befinden, der in einem Bereich von -70 bis 550° C temperaturbeständig ist.

Hierbei erweist es sich als vorteilhaft, daß Träger und Leiterbahnen in der üblichen Leiterplattentechnik hergestellt werden können und keine besonderen Herstellverfahren erforderlich sind.

Weiterhin wird in einer bevorzugten Ausführungsform auf eine Leiterbahn aus Kupfer oder Aluminium bzw. einer Kupfer- bzw. Aluminium-Basislegierung eine Schicht aus Nickel, einem Platingruppenmetall oder einer Nickel- bzw. Platingruppenmetall-Basislegierung aufgebracht. Der hierbei erzielbare Vorteil ist darin zu sehen, daß eine elektrisch gut leitende preisgünstige Schicht vor Hochtemperaturkorrosion durch eine Nickel- bzw. Edelmetallschicht geschützt wird.

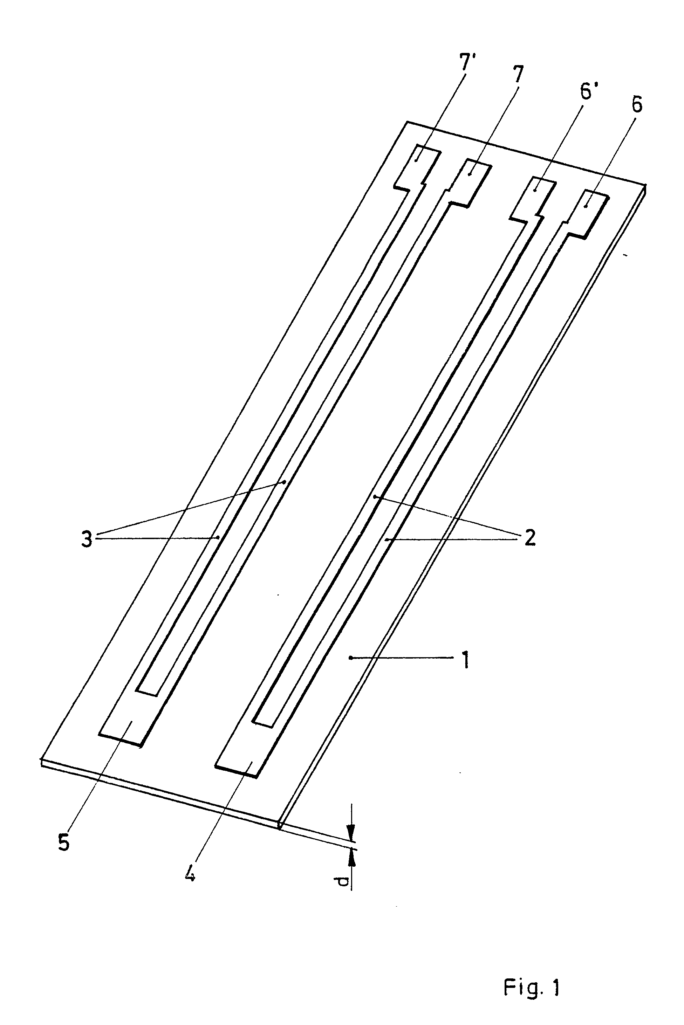

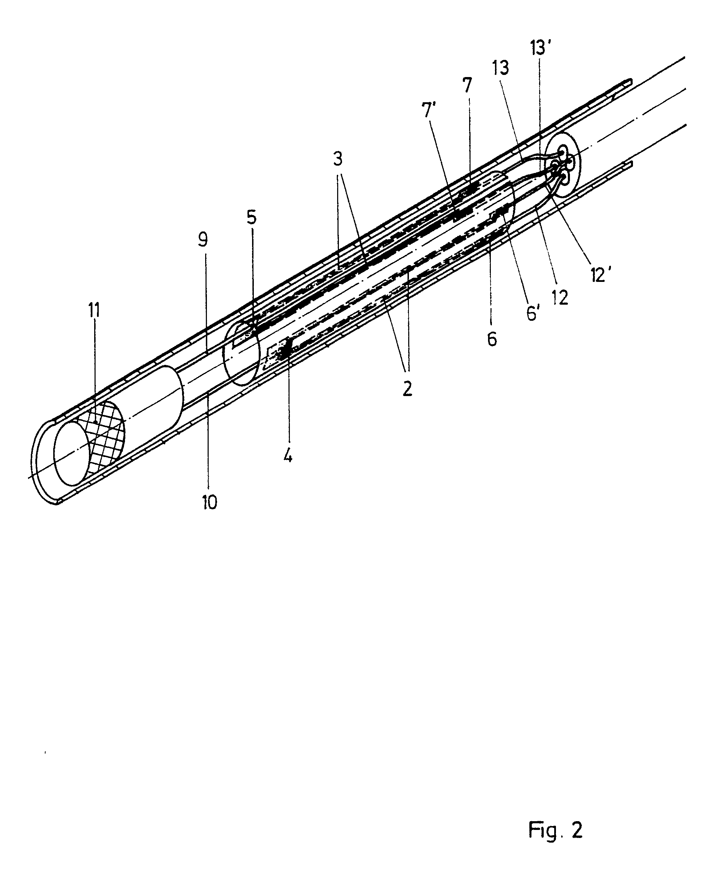

Im folgenden ist der Gegenstand der Erfindung anhand der Figuren 1 und 2 näher erläutert.

Figur 1 zeigt in einer perspektivischen Darstellung den mit Leiterbahnen versehenen Träger vor seinem Einsatz im Schutzrohr,

Figur 2 zeigt in einem perspektivischen Aufriß den Temperaturmeßfühler mit dem eingesetzten Träger.

Gemäß Figur 1 weist der Träger eine flexible Leiterplatte 1 auf, die aus temperaturbeständigem Kunststoff besteht. Auf der Oberfläche der Leiterplatte 1 befinden sich die streifenförmigen, zueinander parallel angeordneten Leiterbahnen 2, 3, welche an einem Ende mit den Anschlußkontakten 4, 5 für den Temperatursensor und an den gegenüberliegenden Enden mit den Anschlußkontakten 6, 6', 7, 7' für die Signalübertragungsleitung versehen sind. Der Träger besteht aus einer federelastischen Kunststoffplatte, deren mit d bezeichnete Dicke einen Bereich von 25 bis 250μ aufweist. Als Material für die Trägerplatte werden Kunststoffe, wie Polytetrafluoräthylen, Polyimid, Epoxydharz oder andere Kunststoffe, wie beispielsweise PEEK, je nach Temperaturanwendung verwendet. Als besonders vorteilhaft hat sich der Einsatz von Polytetrafluoräthylen erwiesen, da es sich einerseits um ein verhältnismäßig preiswertes Produkt und andererseits um einen Kunststoff handelt, der in einem Bereich von -269 bis 300° C einsetzbar ist. Bei sehr hohen Temperaturen ist es möglich, Kunststoffe, wie beispielsweise PBI, einzusetzen, die eine Temperaturobergrenze von 550° C bzw. von 750° C für kurzzeitige Erwärmung ohne Verlust ihrer Materialeigenschaften überstehen.

Die Leiterbahnen bestehen aus Kupfer oder Aluminium bzw. einer Kupfer-, Aluminium-Basislegierung. In einer bevorzugten Ausführungsform ist auf dieser Grundschicht der Leiterbahn eine weitere Schicht aus Nickel, aufgetragen. Die Dicke der Leiterbahn liegt im Bereich zwischen 1μm und 70μm. Der in Figur 1 dargestellte Träger entspricht zwecks besserer Anschaulichkeit nicht den maßstabsgerechten Verhältnissen, wie sie vorstehend aufgeführt sind.

Die Leiterbahn ist auf die Leiterplatte aufgedampft oder durch Kathodenzerstäubung aufgebracht und anschließend durch chemische oder galvanische Behandlung auf die Enddicke verstärkt.

Gemäß Figur 2 befindet sich der Träger 1 in einem Schutzrohr 8 aus Metall, in das er so eingeschoben ist, daß die Oberfläche des Trägers mit den Leiterbahnen 2, 3 zum Innern des Schutzrohres ausgerichtet ist. Die Kontaktstellen 4 und 5 sind dabei über die Leitungen 9, 10 mit dem Thermosensor 11 verbunden, der als Temperaturmeßwiderstand ausgebildet ist. Es ist jedoch auch möglich, als Thermosensor einen piezoelektrischen Temperatursensor einzusetzen. Das Schutzrohr 8 besteht aus Metall.

Der Träger 1 ist an seinem anderen Ende mit den Kontaktflächen 6, 6', 7, 7' versehen, wobei jeweils zwei Kontaktflächen mit dem gleichen Kontakt des Thermosensors verbunden sind. Auf diese Weise wird zur Erhöhung der Zuverlässigkeit eine doppelte Signalübertragung sichergestellt. Die Kontaktstellen sind mit den jeweiligen Anschlußleitungen 12, 12', 13, 13' durch Ultraschall-Schweißung verbunden. Es ist jedoch auch möglich, die Kontaktstellen durch Hart- bzw. Weich-Lötverbindungen mit den Anschlußleitungen zu verbinden.

Als Material für den Träger sind außer den bereits genannten Kunststoffen PETP; TEEK und PBI geeignet; für höhere Temperaturanwendungen im Bereich bis zu 550° C hat sich insbesondere PBI bewährt.

Bei Einsatz eines Widerstandsmeßelements als Thermosensor wird vorzugsweise Platin als Widerstandsmaterial eingesetzt. Als Material für das Schutzrohr ist Edelstahl geeignet.

## Ansprüche

1. Temperaturmeßfühler, bei dem ein Temperatursensor in einer Schutzhülse angeordnet und über in der Schutzhülse verlaufende Zuleitungen mit Anschlußkontakten zum Anschluß an Signalübertragungsleitungen versehen ist, dadurch gekennzeichnet, daß die Zuleitungen elektrisch voneinander isoliert in Form von Leiterbahnen (2, 3) auf einem federnd ausgebildeten Träger (1) angeordnet sind, der unter Federspannung an der Innenfläche der Schutzhülse anliegt.

2. Temperaturmeßfühler nach Anspruch 1, dadurch gekennzeichnet, daß der federnd ausgebildete Träger (1) aus einer Platte mit wenigstens einer isolierenden Oberfläche besteht, wobei die Leiterbahnen (2, 3) in Form von einer oder mehreren Schichten auf der isolierenden Oberfläche aufgebracht sind.

3. Temperaturmeßfühler nach Anspruch 2, dadurch gekennzeichnet, daß die Leiterbahnen (2, 3) jeweils aus wenigstens zwei übereinanderliegenden Metallschichten bestehen.

4. Temperaturfühler nach einem der Ansprüche 1 bis 3, dadurch gekennzeichnet, daß der Träger (1) in einem Bereich bis mindestens 180° C temperaturbeständig ist.

5. Temperaturfühler nach Anspruch 4, dadurch gekennzeichnet, daß der Träger (1) aus Epoxydharz, Polytetrafluoräthylen oder Polyimid besteht.

6. Temperaturfühler nach einem oder mehreren der vorhergehenden Ansprüche, dadurch gekennzeichnet, daß die Leiterbahn (2, 3) eine Schicht aus Kupfer, Aluminium oder einer Kupfer- bzw.

Aluminium-Basislegierung aufweist.

Fig. 1

Fig. 2